# EUROPÄISCHE PATENTANMELDUNG

(11) **EP 1 455 202 A1**
(43) Veröffentlichungstag der Anmeldung: **08.09.2004**
(21) Anmeldenummer: 04100535.6
(22) Anmeldetag: 12.02.2004
(51) Int. Cl.: G02B 5/00, G03B 9/22

(54) **Irisblenden-Einrichtung**

(30) Priorität: 03.03.2003 DE 10309340
(71) Anmelder: Leica Microsystems Wetzlar GmbH, 35578 Wetzlar (DE)
(72) Erfinder: Bamberger, Stefan, 35578, Wetzlar (DE); Weiss, Albrecht, 35440 Linden (DE)
(74) Vertreter: Reichert, Werner F., Dr.

(57) **Zusammenfassung**

Die Erfindung betrifft eine Irisblenden-Einrichtung für ein Mikroskop mit einer Irisblende (1), die einen feststehenden Fassungsring (2), einen drehbaren Verstellring (3) sowie eine Anzahl von Lamellen (4) aufweist, wobei durch Drehen des Verstellrings (3) eine von den Lamellen (4) freigelassene Blenden-Öffnung (5) stufenlos zwischen einer Maximalöffnung und einer Minimalöffnung verstellbar ist. Erfindungsgemäß ist an dem Verstellring (3) ein Koppel-Getriebe (6) mit mindestens zwei Hebeln (7, 8) angeordnet, das mittels eines Betätigungselementes angetrieben wird. Zusätzlich ist ein Verschluss-Element (11) an einem der Hebel (7, 8) so angeordnet, dass es ab Erreichen einer bestimmten Größe der Blenden-Öffnung (5) vor diese schwenkt und sie abdeckt. In einer besonderen Ausgestaltung ist das Koppel-Getriebe (6) so ausgelegt, dass die Änderung der Blenden-Öffnung (5) in Abhängigkeit vom Drehwinkel des Betätigungselementes (9) annähernd logarithmisch erfolgt. Das Betätigungselement (9) kann manuell oder motorisch betrieben werden.

## Beschreibung

Die Erfindung betrifft eine Irisblenden-Einrichtung für ein Mikroskop mit einer Irisblende, die einen feststehenden Fassungsring, einen drehbaren Verstellring sowie in einer einzigen Blendenebene eine Anzahl von Lamellen aufweist, so dass durch Drehen des Verstellrings eine von den Lamellen freigelassene Blenden-Öffnung stufenlos zwischen einer Maximalöffnung und einer Minimalöffnung verstellbar ist.

Irisblenden-Einrichtungen der eingangs genannten Art dienen zur Regulierung des Strahlquerschnitts in optischen Geräten, beispielsweise in Mikroskopen. Die Anordnung der Lamellen ist so realisiert, dass deren eines Ende jeweils an der Ringfassung drehbar gelagert und deren anderes Ende jeweils an dem Verstellring befestigt ist. Dadurch können durch Drehen des Verstellrings die Lamellen beliebig in den Strahlengang eingebracht werden, wobei stets eine zentrale Öffnung frei bleibt. Diese zentrale Öffnung ist stufenlos zwischen einer Maximalöffnung und einer Minimalöffnung verstellbar.

Diese aus dem Stand der Technik bekannten Irisblenden-Einrichtungen lassen sich also nicht vollständig verschließen, sodass stets ein verbleibender Teil des Strahlquerschnitts hindurchtreten kann. Es sind andere Irisblenden-Einrichtungen mit großen Irisblenden für Anwendungen außerhalb der Mikroskopie bekannt, bei denen eine bekannte Irisblenden-Einrichtung mit einer zusätzlichen speziell geformten Lamelle kombiniert wird (z.B. von der Firma Wilkes-Iris, siehe z.B. Internetseite www.wilkes-iris.com). Nach Erreichen der Minimalöffnung der Irisblende wird durch weitere Betätigung des Bedienhebels unter zusätzlichem Kraftaufwand diese speziell geformte Lamelle als Springblende vor die Minimalöffnung gebracht.

Eine andere Irisblenden-Einrichtung (z.B. von der Firma Wilkes-Iris oder der Fa. Edmund Optics, siehe z.B. Internetseite www.edmundoptics.com) weist in einer sehr speziellen Konstruktion zwei in einem Abstand von einigen Millimetern hintereinanderliegende Lamellenpakete auf. Auf diese Weise ist es möglich, durch versetzt hintereinanderliegende Minimalöffnungen der beiden Lamellenpakete einen vollständigen Verschluss dieser speziellen Irisblenden-Einrichtung vorzunehmen. Auf diese Weise tritt zwar kein Licht des Strahlquerschnitts mehr durch die Irisblenden-Einrichtung, jedoch ist hier wegen der zwei Lamellenpakete in unterschiedlichen Ebenen keine definierte Blendenebene vorhanden. Dies erweist sich jedoch für die Mikroskopie als äußerst ungeeignet, da dort eine einzige definierte Blendenebene erforderlich ist.

Es ist daher Aufgabe der vorliegenden Erfindung, eine Irisblenden-Einrichtung anzugeben, welche sich vollständig verschließen lässt und zugleich eine einzige definierte Blendenebene für Anwendungen in der Mikroskopie aufweist. Zugleich soll die neue Irisblenden-Einrichtung einen geringen Einbauraum benötigen und preiswert sein.

Diese Aufgabe wird gelöst durch eine Irisblenden-Einrichtung für ein Mikroskop mit einer Irisblende, die einen feststehenden Fassungsring, einen drehbaren Verstellring sowie eine Anzahl von Lamellen aufweist, wobei durch Drehen des Verstellrings eine von den Lamellen freigelassene Blenden-Öffnung stufenlos zwischen einer Maximalöffnung und einer Minimalöffnung verstellbar ist, welche erfindungsgemäß folgende Merkmale aufweist:
- dass ein Koppel-Getriebe mit mindestens zwei Hebeln an dem Verstellring angeordnet ist, das mittels eines Betätigungselementes angetrieben wird,
- und dass ein Verschluss-Element an einem der Hebel so angeordnet ist, das es nach Einstellen einer bestimmten Größe der Blenden-Öffnung beim Weiterbetätigen des Betätigungselementes vor die Blenden-Öffnung schwenkt und diese abdeckt.

Die erfindungsgemäße Irisblenden-Einrichtung hat den Vorteil, dass durch die Verwendung von sehr flachen Hebeln die Gesamteinbautiefe und damit der Platzbedarf für die Irisblenden-Einrichtung sehr gering ist. Außerdem wird eine einzige definierte Blendenebene, nämlich in der von den Lamellen freigelassenen Blenden-Öffnung, beibehalten. Dadurch ist die erfindungsgemäße Irisblenden-Einrichtung ideal für die Verwendung in einem Mikroskop geeignet, da eine exakte Position der Blendenebene im Abbildungsstrahlengang gewährleistet ist.

Die Formgebung und Position des Verschluss-Elementes an einem der Hebel wird so gewählt, dass das Verschluss-Element bei Erreichen einer bestimmten Größe der Blenden-Öffnung vor diese Blenden-Öffnung schwenkt und diese abdeckt. In einer besonders vorteilhaften Ausführungsform schwenkt das Verschluss-Element erst nach Einstellen der Minimalöffnung der Blenden-Öffnung vor die Blenden-Öffnung und deckt diese ab. Zum Einschwenken des Verschluss-Elementes wird daher das Betätigungselement weiter gedreht, sodass das Verschluss-Element vor die Blenden-Öffnung schwenkt, während zugleich die dahinterliegende, nunmehr verdeckte Blenden-Öffnung bereits wieder etwas größer als die Minimalöffnung selbst geöffnet wird. Um diese Blenden-Öffnung abzudecken wird daher die Breite des Verschluss-Elementes entsprechend gewählt. Auf diese Weise erlaubt die Irisblenden-Einrichtung eine stufenlose Einstellung der Blenden-Öffnung zwischen der Maximalöffnung und der Minimalöffnung und nach Erreichen der Minimalöffnung ein Verschließen der Blenden-Öffnung.

Ein weiterer Vorteil der erfindungsgemäßen Irisblenden-Einrichtung ist, dass nur ein einziges Betätigungselement zum Einstellen der gewünschten Blenden-Öffnung und zum Verschließen der Blenden-Öffnung benötigt wird, wohingegen solche Irisblenden-Einrichtungen, die aus dem Stand der Technik bekannt sind, mit zwei oder mehr Betätigungselementen betätigt werden müssen. Das Betätigungselement kann beispielsweise ein manuell oder motorisch angetriebenes Antriebsrad sein. Ebenso kann ein linear verschiebbares Bedienelement, wie eine Schubstange oder Ähnliches, vorgesehen sein, dessen Linearbewegung auf das drehbare Betätigungselement, beispielsweise ein Antriebsrad, übertragen wird, welches wiederum das Koppel-Getriebe antreibt. In einer anderen Ausführungsform der Irisblenden-Einrichtung kann das Betätigungselement als ein Elektromotor ausgebildet sein, beispielsweise ein Schrittmotor.

Durch die Verwendung eines Koppel-Getriebes ergibt sich für die erfindungsgemäße Irisblenden-Einrichtung ein weiterer Vorteil. So ändert sich bei bisher bekannten Irisblenden-Einrichtungen die Blenden-Öffnung linear mit dem Verstellwinkel des drehbaren Verstellrings. Ist beispielsweise das Betätigungselement als ein Schrittmotor ausgelegt und erfolgt der Antrieb der Irisblenden-Einrichtung mittels eines Ritzels auf der Motorachse der Schrittmotors und eines in das Ritzel eingreifenden Zahnrads auf der Außenseite des drehbaren Verstellrings, so ändert sich bei den vorbekannten Irisblenden-Einrichtungen mit linearer Verstellung die Blenden-Öffnung mit jedem Motorschritt des Schrittmotors um den gleichen Betrag. Wenn nun der Mikroskopanwender ausgehend von der maximalen Blenden-Öffnung diese um einen festen Anteil, beispielsweise 10 %, verringern will, erfordert dies eine entsprechende Anzahl von Schrittmotorschritten. Ist jedoch die Blenden-Öffnung bereits auf einen sehr geringen Wert knapp oberhalb der minimalen Blenden-Öffnung eingestellt, so erfordert eine Verringerung dieser schon recht kleinen Blenden-Öffnung ebenfalls um die genannten 10 % wesentlich weniger Schritte oder die Auflösung des Motors reicht nicht aus, um entsprechend kleine Änderungen der Blenden-Öffnung vorzunehmen. Dies hat zur Folge, dass für das Arbeiten mit kleinen Blenden-Öffnungen und eine exakte Einstellung von Änderungen bei kleinen Blenden-Öffnungen ein Schrittmotor mit deutlich höherer Auflösung eingesetzt werden muss. Dieser Schrittmotor ist jedoch deutlich teurer und benötigt eine entsprechend teurere Ansteuerung. Daher ist bei einer Irisblenden-Einrichtung keine lineare Abhängigkeit der Blenden-Öffnung vom Motorwinkel, bzw. dessen Schritten, sondern eine logarithmische Abhängigkeit gewünscht. Diese Anforderung ist bei der erfindungsgemäßen Irisblenden-Einrichtung in einer speziellen Ausbildung dadurch realisiert, dass durch spezielle Ausgestaltung des Koppel-Getriebes die Änderung der Blenden-Öffnung in Abhängigkeit vom Drehwinkel des Betätigungselementes annähernd logarithmisch erfolgt. Auf diese Weise ist bei Verwendung eines Schrittmotors als Betätigungselement die relative Änderung der Blenden-Öffnung von einem Motorschritt zum anderen konstant. Dies erlaubt bei kleinen Blenden-Öffnungen sehr feinfühlige Änderungen dieser Blenden-Öffnungen mit jedem einzelnen Motorschritt, wobei gleichzeitig eine gleichbleibende Verstellgeschwindigkeit gewährleistet ist.

Dies ist ein erheblicher Vorteil gegenüber den Irisblenden-Einrichtungen, die aus dem Stand der Technik bekannt sind, bei denen zur gezielten Änderung kleiner Blenden-Öffnungen bei dem Zahnrad-Ritzel-Antrieb eine hohe Untersetzung erforderlich ist, was sich jedoch negativ auf die Geschwindigkeit für den Gesamtverstellbereich auswirkt. Daher bietet die erfindungsgemäße Irisblenden-Einrichtung den Vorteil einer schnellen und präzisen Änderung der Blenden-Öffnung für den gesamten Verstellbereich, also zwischen der Maximalöffnung und der Minimalöffnung. Durch geeignete Auslegung der beiden Hebel des Koppel-Getriebes erhält man eine Ausführungsform der Irisblenden-Einrichtung, bei welcher die Änderung der Blenden-Öffnung in Abhängigkeit vom Drehwinkel des Betätigungselementes insbesondere bei kleinen Blenden-Öffnungen annähernd logarithmisch erfolgt. Diese Ausgestaltung ist insofern vorteilhaft, weil gerade bei kleinen Blenden-Öffnungen und deren relativen Änderungen der Vorteil der logarithmischen Abhängigkeit der Blenden-Öffnung vom Verstellwinkel besonders vorteilhaft zum Tragen kommt.

Um ein Überdrehen oder Verkanten des Koppel-Getriebes zu verhindern, erweist es sich als vorteilhaft, wenn der Drehbereich des Betätigungselementes begrenzt ist. Diese Begrenzung wird vorzugsweise so eingestellt, dass eine Einstellung des Koppel-Getriebes von der Maximalöffnung der Irisblende bis zu dem Einschwenken des Verschluss-Elementes vor die Blenden-Öffnung möglich ist.

Die Erfindung wird nachstehend anhand der schematischen Zeichnung näher beschrieben. Es zeigen:
- ***Fig. 1a:***: Eine Irisblenden-Einrichtung mit maximaler Blenden-Öffnung;
- ***Fig. 1b:***: Eine Irisblenden-Einrichtung mit mittlerer Blenden-Öffnung;
- ***Fig. 1c:***: Eine Irisblenden-Einrichtung mit minimaler Blenden-Öffnung;
- ***Fig. 1d:***: Eine Irisblenden-Einrichtung mit einer durch ein Verschluss-Element abgedeckten Blenden-Öffnung;
- ***Fig. 2:***: logarithmischer Zusammenhang zwischen Blenden-Öffnung und Drehwinkel des Betätigungselementes.

***Fig****.* **1a** zeigt eine Irisblenden-Einrichtung mit einer Irisblende 1. Diese weist einen feststehenden Fassungsring 2, einen drehbaren Verstellring 3 sowie eine Anzahl von Lamellen 4 (in der Abbildung verdeckt) auf. Die Lamellen 4 geben in der Mitte der Irisblende 1 eine Blenden-Öffnung 5 frei. Diese ist zwischen einer Maximalöffnung und einer Minimalöffnung stufenlos verstellbar. In der hier dargestellten Einstellung der Irisblenden-Einrichtung befindet sich das Betätigungselement 9 in einer Position die als 0°-Position definiert ist. Eine entsprechende 0°-Achse durch die Drehachse des Betätigungselements 9 ist eingezeichnet. In der so vorgegebenen Stellung des Koppel-Getriebes 6 entspricht die Blenden-Öffnung 5 der Maximalöffnung. Daher sind die Lamellen 4 in dieser Figur von dem Verstellring 3 verdeckt.

Um die Verstellung der Blenden-Öffnung 5 vorzunehmen, greift an der Irisblende 1 ein Koppel-Getriebe 6 an. Das Koppel-Getriebe 6 weist mindestens zwei Hebel auf, von denen jeweils einer an dem drehbaren Verstellring 3 drehbar gelagert ist und von denen ein weiterer Hebel fest mit einem Betätigungselement verbunden ist. In der hier dargestellten Ausführungsform des Koppel-Getriebes 6 weist dieses einen ersten Hebel 7 und einen zweiten Hebel 8 auf. Der erste Hebel 7 ist mit seinem einen Ende drehbar an dem drehbaren Verstellring 3 gelagert. Der zweite Hebel 8 ist mit seinem einen Ende fest mit einem Betätigungselement 9, hier beispielsweise einem Schrittmotor, verbunden. An ihren freien Enden sind der erste Hebel 7 und der zweite Hebel 8 mittels einer gemeinsamen beweglichen Drehachse 10 miteinander gekoppelt. An dem zweiten Hebel 8 ist ein Verschluss-Element 11 angeordnet, welches durch die starre Verbindung zwischen dem Verschluss-Element 11 und dem zweiten Hebel 8 der Drehbewegung des zweiten Hebels 8 folgt. In der vorliegenden Ausgestaltung der Irisblenden-Einrichtung sind der erste Hebel 8 und das Verschluss-Element 11 einstückig ausgebildet.

Alternativ können sie aus zwei separaten Bauteilen bestehen und eine starre Verbindung aufweisen.

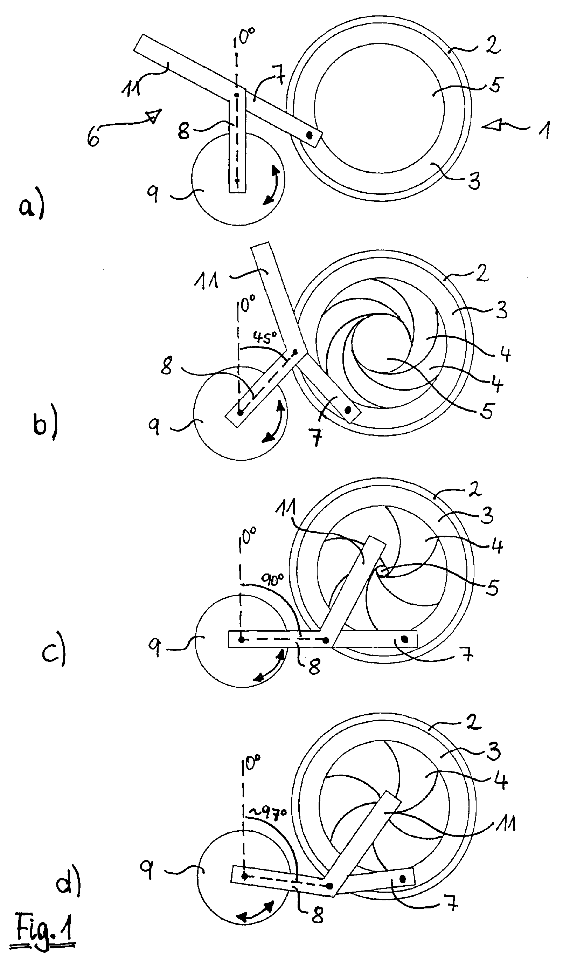

In ***Fig. 1b*** ist dieselbe Irisblenden-Einrichtung mit einer mittleren Einstellung der Blenden-Öffnung 5 dargestellt. In dieser Einstellung der Irisblende 1 sind deutlich die Lamellen 4 zu sehen, welche in der Mitte der Irisblende nur noch einen Teil der insgesamt maximal möglichen Blenden-Öffnung 5 freilassen. Das Betätigungselement 9 hat in dieser Position den zweiten Hebel 8 um ca. 45° weitergedreht. Dadurch hat der erste Hebel 7 den drehbaren Verstellring 3 soweit weitergedreht, dass die Lamellen 4 den Strahlquerschnitt begrenzt haben und lediglich eine mittlere Blenden-Öffnung 5 freigeben.

In ***Fig. 1c*** ist die Irisblenden-Einrichtung in einer Einstellung gezeigt, in der lediglich die Minimalöffnung der Blenden-Öffnung 5 freigegeben wird. Dazu hat das Betätigungselement 9 den zweiten Hebel 8 um insgesamt 90° gegenüber der 0°-Position weitergedreht. Entsprechend hat der erste Hebel 7 den drehbaren Verstellring 3 soweit weitergedreht, dass die Lamellen 4 noch weiter in den Strahlengang eingebracht wurden und lediglich eine Minimalöffnung der Blenden-Öffnung 5 freilassen. Durch die Drehung des zweiten Hebels 8 wurde zugleich das Verschluss-Element 11 mitbewegt. Wie aus der Fig. ersichtlich, liegt das Verschluss-Element 11 jetzt direkt neben der in Minimalöffnung befindlichen Blenden-Öffnung.

In ***Fig. 1d*** ist das Betätigungselement 9 gegenüber der Position in ***Fig. 1c*** noch um weitere 7° weitergedreht worden, und hat dabei den zweiten Hebel 8 und das Verschluss-Element 11 entsprechend mitbewegt. In dieser Stellung verdeckt das Verschluss-Element 11 die Blenden-Öffnung 5, die durch das Weiterdrehen des Betätigungselementes bereits etwas größer ist als die Minimalöffnung. Dies ist jedoch nicht zu sehen, da diese bereits etwas vergrößerte Blenden-Öffnung 5 gänzlich von dem Verschluss-Element 11 verdeckt wird. Somit ist in dieser Fig. gezeigten Einstellung ein vollständiger Verschluss der Irisblende 1 mittels des Verschluss-Elements 11 realisiert. Der erste Hebel 7, der zweite Hebel 8 sowie das Verschluss-Element 11 sind vorzugsweise aus flachem Material gefertigt. Das Verschluss-Element 11 wird sehr dicht vor die Blenden-Öffnung 5 geschwenkt und gewährleistet dadurch, dass die einzige Blendenebene, die von den Lamellen 4 definiert wird, für die Abbildung im Mikroskopstrahlengang erhalten bleibt.

Bei dem verwendeten Koppel-Getriebe 6 wird gegen Ende des Verstellbereiches der Blenden-Öffnung 5 pro Schritt des Schrittmotors, der hier als Betätigungselement 9 eingesetzt wird, immer weniger Änderung des Durchmessers der Blenden-Öffnung 5 bewirkt. Man erreicht damit in guter Näherung den gewünschten logarithmischen Verlauf.

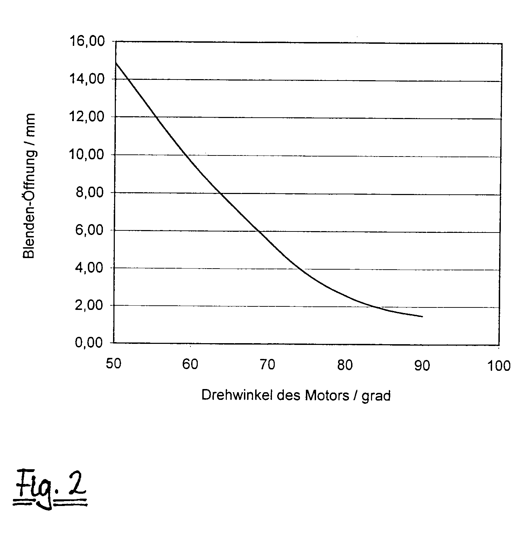

***Fig. 2*** zeigt für die in ***Fig. 1a-d*** gezeigten Irisblenden-Einrichtung den Zusammenhang zwischen Blendenöffnung in Millimeter und Drehwinkel des als Betätigungselement verwendeten Motors in Grad für kleine Blenden-Öffnungen 5. Durch den logarithmischen Verlauf wird pro Motordrehung eine hohe Kraft in Drehrichtung erzeugt, welche die Irisblende 1 auch im Bereich der kleinsten Blenden-Öffnungen 5 sicher betätigen kann. ***Fig. 2*** zeigt diesen logarithmischen Zusammenhang für den Bereich der kleinen Blenden-Öffnungen. Mit anderen Hebellängen der Hebel 7 und 8 lässt das logarithmische Verhalten auch auf einen größeren Bereich von Blenden-Öffnungen erweitern.

### Bezugszeichenliste

- 1.: Irisblende
- 2.: feststehender Fassungsring
- 3.: drehbarer Verstellring
- 4.: Lamellen
- 5.: Blenden-Öffnung
- 6.: Koppel-Getriebe
- 7.: erster Hebel
- 8.: zweiter Hebel
- 9.: Betätigungselement
- 10.: Drehachse
- 11.: Verschluss-Element

## Patentansprüche

1. Irisblenden-Einrichtung für ein Mikroskop mit einer Irisblende (1), die einen feststehenden Fassungsring (2), einen drehbaren Verstellring (3) sowie eine Anzahl von Lamellen (4) aufweist, wobei durch Drehen des Verstellrings (3) eine von den Lamellen (4) freigelassene Blenden-Öffnung (5) stufenlos zwischen einer Maximalöffnung und einer Minimalöffnung verstellbar ist,
**dadurch gekennzeichnet,**
- **dass** ein Koppel-Getriebe (6) mit mindestens zwei Hebeln (7, 8) an dem Verstellring (3) angeordnet ist, das mittels eines Betätigungselementes (9) angetrieben wird,
- und **dass** ein Verschluss-Element (11) an einem der Hebel (7, 8) so angeordnet ist, das es nach Einstellen einer bestimmten Größe der Blenden-Öffnung (5) beim Weiterbetätigen des Betätigungselementes (9) vor die Blenden-Öffnung (5) schwenkt und diese abdeckt.

2. Irisblenden-Einrichtung nach Anspruch 1, **dadurch gekennzeichnet**, das Verschluss-Element (11) nach Einstellen der Minimalöffnung der Blenden-Öffnung (5) vor die Blenden-Öffnung (5) schwenkt und diese abdeckt.

3. Irisblenden-Einrichtung nach Anspruch 1, **dadurch gekennzeichnet, dass** das Betätigungselement (9) ein manuell oder motorisch angetriebenes Antriebsrad ist.

4. Irisblenden-Einrichtung nach Anspruch 1, **dadurch gekennzeichnet, dass** das Betätigungselement (9) ein Elektromotor ist.

5. Irisblenden-Einrichtung nach Anspruch 4, **dadurch gekennzeichnet, dass** der Elektromotor ein Schrittmotor ist.

6. Irisblenden-Einrichtung nach Anspruch 1, **dadurch gekennzeichnet, dass** das Koppel-Getriebe (6) so ausgelegt ist, dass die Änderung der Blenden-Öffnung (5) in Abhängigkeit vom Drehwinkel des Betätigungselementes (9) annähernd logarithmisch erfolgt.

7. Irisblenden-Einrichtung nach Anspruch 6, **dadurch gekennzeichnet, dass** die Änderung der Blenden-Öffnung (5) in Abhängigkeit vom Drehwinkel des Betätigungselementes (9) insbesondere bei kleinen Blenden-Öffnungen (5) annähernd logarithmisch erfolgt.

8. Irisblenden-Einrichtung nach einem der Ansprüche 1 bis 7, **dadurch gekennzeichnet, dass** der Drehbereich des Betätigungselementes (9) so begrenzt ist, dass durch Verstellen des Koppel-Getriebes (6) alle Einstellungen der Blenden-Öffnung (5), also zwischen der Maximalöffnung bis zu dem Einschwenken des Verschluss-Elementes (11) vor die Blenden-Öffnung (5), einstellbar sind.
